# EUROPEAN PATENT APPLICATION

(11) **EP 4 841 482 A1**
(43) Date of publication of application: **18.11.2026**
(21) Application number: 25854496.4
(22) Date of filing: 24.06.2025
(51) Int. Cl.: G06F 18/23211, G06F 18/231, G06F 18/2135, G06F 11/34, G06F 11/30, B60L 58/12, G06Q 10/06, G06Q 50/40

(54) **ELECTRONIC DEVICE, RECORDING MEDIUM, AND METHOD FOR CLUSTERING DATA RELATED TO BATTERY CHARGING PATTERN THEREOF**

(30) Priority: 14.08.2024 KR 20240109373; 22.10.2024 KR 20240144730
(71) Applicant: LG Energy Solution, Ltd., Seoul 07335 (KR)
(72) Inventor: KIM, Kangsan, Daejeon 34122 (KR); KIM, Jangkyum, Daejeon 34122 (KR); PARK, Ju Yeon, Daejeon 34122 (KR); IM, Jae Dong, Daejeon 34122 (KR)
(74) Representative: Plasseraud IP
(86) International application number: PCT/KR2025/008804
(87) International publication number: WO 2026/038683

(57) **Abstract**

An electronic device for clustering data related to a battery charging pattern is provided. The electronic device can acquire a plurality of pieces of battery charging data for a plurality of vehicles, generate a plurality of feature maps related to a battery charging pattern on the basis of each of the plurality of pieces of battery charging data, perform image processing on each of the plurality of feature maps on the basis of an image pooling technique, calculate similarity between each of the plurality of feature maps on which the image processing has been performed, determine, on the basis of the calculated similarity, a clustering algorithm and an index for evaluating a clustering result, the optimal number of clusters for the plurality of feature maps on which the image processing has been performed, and cluster the plurality of feature maps on which the image processing has been performed into the optimal number of clusters.

## Description

### Technical Field

The present disclosure relates to an electronic apparatus, a recording medium, and a method for clustering data regarding a battery charging pattern thereof. Specifically, the present disclosure relates to a technology of clustering battery charging pattern data by setting a boundary between types of charging patterns of an electric vehicle user to be clearly distinguished.

This application claims the benefit of Korean Patent Application Nos. 2024-0109373, filed on August 14, 2024, and 2024-0144730, filed on October 22, 2024 in the Korean Intellectual Property Office, the disclosures of which are incorporated herein by reference in their entireties.

### Background Art

In order to discover the type of the charging pattern of an electric vehicle user, the time-series data on the battery charging pattern may be processed and clustered, so that the characteristics of the charging or discharging by the user may be patterned without being distorted. However, when there is a large amount of data to be clustered, the variation of the data may be increase, and the number of non-standardizable exceptional cases also may be increased. Accordingly, the boundaries of the different types may become indistinct. To solve this, a clustering technique in unsupervised learning may be used, but the data may be still present at the boundary between the clusters. As a result, the searching of a distinct boundary that divides the clusters from each other may be difficult.

In this regard, a density-based clustering technique such as density-based spatial clustering of applications with noise (DBSCAN) may be a solution thereto, but may have a large number of hyperparameters to adjust depending on the characteristics of the data to be clustered. Also, the performance of the clustering may be greatly dependent on the hyperparameters. In addition, when an excessively large amount of data is present, a distinguishable difference in density may not be guaranteed.

Thus, the method of designating a sufficient amount of clusters and reducing the number thereof one by one in a manual way has been used conventionally. However, in such a method, a subjective factor is involved, a large amount of time is required, and a greatly large amount of resources are consumed. Also, since there is not a clear evidence that the artificially reduced final clusters are the optimal cluster, the evaluation of the clustering performance is imprecise. Accordingly, the method of discovering an optimal number of distinctly distinguished types of a significantly large amount of data is required.

### Description of the Invention

### Technical Goals

Example embodiments of the present disclosure is proposed in order to solve the above-described difficulty and is to provide an electronic apparatus, a recording medium, and a method for clustering data regarding a battery charging pattern thereof.

However, the goals to be achieved by example embodiments of the present disclosure are not limited to the objectives described above and other objects may be clearly understood from the following example embodiments.

### Technical solutions

According to an aspect, there is provided an electronic apparatus including a transceiver, a processor, and one or more memories configured to store one or more instructions, and when the one or more instructions are executed, the processor is configured to acquire a plurality of pieces of battery charging data on a plurality of vehicles, generate a plurality of feature maps on battery charging patterns based on each of the plurality of pieces of battery charging data, perform image processing on each of the plurality of feature maps based on an image pooling technique, calculate a similarity degree between the plurality of feature maps on which the image processing is performed, determine, based on the calculated similarity degree, a clustering algorithm, and an index evaluating a clustering result, an optimal number of clusters for the plurality of feature maps on which the image processing is performed, and perform clustering of the plurality of feature maps on which the image processing is performed into clusters of which the number is the optimal number of clusters.

The plurality of pieces of battery charging data may be data collected for a predetermined time for each of a plurality of batteries included in the plurality of vehicles and include information on a state of charge (SoC) over time.

When the one or more instructions are executed, the processor may be configured to identify one or more charging periods based on first battery charging data on a first vehicle among the plurality of pieces of battery charging data on the plurality of vehicles, identify an SoC of a battery at a charging start time point and an SoC of the battery at a charging end time point for each of the one or more charging periods, and generate a first feature map showing a frequency of the one or more periods which correspond to a range of the SoC of the battery at the charging start time point and a range of the SoC of the battery at the charging end time point.

The frequency of the one or more charging periods may be identified based on a probability density function.

The image pooling technique may include a max pooling technique of selecting maximum values corresponding to a plurality of areas included in a target feature map and generating a feature map formed of the maximum values of the plurality of areas and a dilation pooling technique of generating a feature map formed of a representative value of at least a portion of values individually included in the plurality of areas.

When the one or more instructions are executed, the processor may be configured to calculate, based on a structural similarity index measure, the similarity degree between the plurality of feature maps on which the image processing is performed.

When the one or more instructions are executed, the processor may be configured to perform the clustering of the plurality of feature maps, on which the image processing is performed, a plurality of times so that a number of clusters varies depending on the calculated similarity degree and the clustering algorithm, and determine, based on a result of performing the clustering the plurality of times and the index evaluating the clustering result, the optimal number of clusters for the plurality of feature maps on which the image processing is performed.

The clustering algorithm may include a hierarchical clustering algorithm that hierarchizes, based on the similarity degree, at least a portion of feature maps included in the plurality of feature maps on which the image processing is performed.

The index may include a first index, a second index, and a third index, and when the one or more instructions are executed, the processor may be configured to calculate, based on the result of performing the clustering the plurality of times, each of the first index based on a number of clusters, the second index based on a number of clusters, and the third index based on a number of clusters, and determine an optimal number of clusters for the plurality of feature maps on which the image processing is performed based on a first number of clusters corresponding to a maximum value or a minimum value of the calculated first index based on the number of clusters, a second number of clusters corresponding to a maximum value or a minimum value of the calculated second index based on the number of clusters, and a third number of clusters corresponding to a maximum value or a minimum value of the calculated third index based on the number of clusters.

The first index, the second index, and the third index each may include at least one of a silhouette index technique, a Calinski-Harabasz index technique, and a Davies-Bouldin index technique that evaluate, for each result of the clustering according to the calculated similarity degree and the clustering algorithm, a result of the clustering based on cohesion of each cluster and inter-cluster separation.

According to another aspect, there is also provided a method of clustering data on a battery charging pattern, the method including acquiring a plurality of pieces of battery charging data on a plurality of vehicles, generating a plurality of feature maps on battery charging patterns based on each of the plurality of pieces of battery charging data, performing image processing on each of the plurality of feature maps based on an image pooling technique, calculating a similarity degree between the plurality of feature maps on which the image processing is performed, determining, based on the calculated similarity degree, a clustering algorithm, and an index evaluating a clustering result, an optimal number of clusters for the plurality of feature maps on which the image processing is performed, and performing clustering of the plurality of feature maps on which the image processing is performed into clusters of which the number is the optimal number of clusters.

According to still another aspect, there is also provided a non-transitory computer-readable recording medium in which a program for executing a method of clustering data on a battery charging pattern on a computer is recorded, the method including acquiring a plurality of pieces of battery charging data on a plurality of vehicles, generating a plurality of feature maps on battery charging patterns based on each of the plurality of pieces of battery charging data, performing image processing on each of the plurality of feature maps based on an image pooling technique, calculating a similarity degree between the plurality of feature maps on which the image processing is performed, determining, based on the calculated similarity degree, a clustering algorithm, and an index evaluating a clustering result, an optimal number of clusters for the plurality of feature maps on which the image processing is performed, and performing clustering of the plurality of feature maps on which the image processing is performed into clusters of which the number is the optimal number of clusters.

### Effects of the Invention

According to the present disclosure, it is possible to discover a main type of a battery charging pattern even of a plurality of pieces of non-clearly distinguishable battery charging data.

According to the present disclosure, it is possible to improve an ability to distinguish data by emphasizing a characteristic of each piece of data and therethrough highlight a boundary between clusters and ultimately easily perform clustering.

According to the present disclosure, it is possible to discover, by selecting an appropriate number of clusters, a type of a charging pattern for effectively identifying a characteristic of data.

Effects of the present disclosure are not limited to those described above and other effects may be made apparent to those skilled in the art from the following description of the accompanying claims.

### Brief Description of Drawings

FIG. 1 is a block diagram illustrating an electronic apparatus according to an example embodiment.
FIG. 2 is a flowchart illustrating a method of clustering data on a battery charging pattern according to an example embodiment.
FIG. 3 illustrates a process of generating a feature map based on data on a battery charging pattern according to an example embodiment.
FIG. 4 illustrates data on a battery charging pattern according to an example embodiment.
FIG. 5 illustrates statistics data on a charging period according to an example embodiment.
FIG. 6 illustrates a probability distribution graph on a frequency of a charging period according to an example embodiment.
FIG. 7 illustrates a feature map according to an example embodiment.
FIG. 8 illustrates a process of performing image processing based on a max pooling technique according to an example embodiment.
FIG. 9 illustrates a process of performing an image processing based on a dilation pooling technique according to an example embodiment.
FIGS. 10A through 10C illustrate a plurality of feature maps on which a pooling technique according to an example embodiment is performed.
FIG. 11 illustrates a process of clustering based on a similarity degree between according to an example embodiment.
FIG. 12 illustrates a process of clustering based on a clustering algorithm and an index according to an example embodiment.
FIG. 13 illustrates a process of determining an optimal number of clusters according to an example embodiment.
FIG. 14A illustrates a first index based on the number of clusters, which is according to an example embodiment.
FIG. 14B illustrates a second index based on the number of clusters, which is according to an example embodiment.
FIG. 14C illustrates a third index based on the number of clusters, which is according to an example embodiment.

### Mode for Carrying Out the Invention

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

In the entire specification, when an element is referred to as "including" another element, the element should not be understood as excluding other elements so long as there is no special conflicting description, and the element may include at least one other element. In addition, the terms "unit" and "module", for example, may refer to a component that exerts at least one function or operation, and may be realized in hardware or software, or may be realized by combination of hardware and software.

Throughout the specification, expression "at least one of a, b, and c" may include 'a only', 'b only', 'c only', 'a and b', 'a and c', 'b and c', or 'all of a, b, and c'.

In the following description, example embodiments of the present disclosure will be described in detail with reference to the accompanying drawings so that those skilled in the art can easily carry out the present disclosure. However, the present disclosure may be embodied in many different forms and is not limited to the example embodiments described herein.

Hereinafter, example embodiments of the present disclosure with respect to an electronic apparatus for clustering data on a battery charging pattern will be described in detail with reference to the drawings.

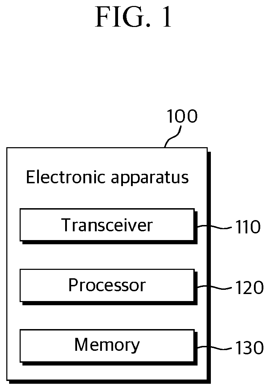

FIG. 1 is a block diagram illustrating an electronic apparatus according to an example embodiment.

Referring to FIG. 1, an electronic apparatus 100 may include a transceiver 110, a processor 120, and a memory 130 according to an example embodiment. Particular elements associated with the present example embodiment are illustrated with respect to the electronic apparatus 100 which is illustrated in FIG. 1. Thus, those skilled in the art associated with the present example embodiment may understand that other elements in general use may be further included in addition to the elements illustrated in FIG. 1.

For example, the electronic device 100 may include a communication device including one or more transceivers 110, an input part, and an output part. The communication device may be a device for performing wired/wireless communication and communicate with an external electronic device. The external electronic device may be a terminal or a server. Also, a communication technology used by the communication device may include Global System for Mobile communication (GSM), Code Division Multi Access (CDMA), Long Term Evolution (LTE), 5th Generation, (5G), a wireless local area network (WLAN), Wireless-Fidelity (Wi-Fi), Bluetooth, radio frequency identification (RFID), infrared data association (IrDA), ZigBee, near field communication (NFC), or the like. The input part may be, for example, a keypad or a keyboard in a traditional form, a mouse, a microphone that receives a voice signal, a camera, or other various forms of input devices that detect or receive various forms of user inputs. The output part may be, for example, a display that outputs an image, a speaker that outputs a sound, a haptic device that generates vibration, or other various forms of output devices.

According to an example embodiment, the electronic apparatus 100 may be a server that acquires and processes data on a plurality of vehicles. Specifically, the data on the plurality of vehicles may include a plurality of pieces of battery charging data on the plurality of vehicles. For example, the plurality of pieces of battery charging data may be acquired through the transceiver 110 of the electronic apparatus 100 from at least one of on-board diagnostics (OBD), a battery management system (BMS), and a device in which battery charging data is stored in advance (e.g., a database) that are mounted to each vehicle. A scheme in which the electronic apparatus 100 acquires the plurality of pieces of battery charging data is not limited to the above-described example. It may be clearly understood to those skilled in the art that the electronic apparatus 100 may acquires the plurality of pieces of driving data through the transceiver 110 from various devices for communication. A type of the electronic apparatus 100 is not limited thereto. Various example embodiments of the present disclosure may be applied to various devices that may acquire and processes data on a vehicle.

The processor 120 may control overall operations of the electronic apparatus 100 and may process data and a signal. The processor 120 may be formed with at least one hardware unit. In addition, the processor 120 may be operated by one or more software modules generated by executing program code stored in the memory 130. Since the processor 120 may include a memory, the processor 120 may control the overall operations of the electronic device 100 and process the data and the signal by executing program code stored in the memory.

The processor 120 may be implemented as a computer or a device similar thereto depending on hardware, software, or a combination thereof. In terms of the hardware, the processor 120 may be implemented in a form of an electronic circuit that performs a control function by processing an electrical signal. In terms of the software, the processor 120 may be implemented in a form of a program that operates the processor 120 as the hardware. Meanwhile, unless additionally described below, an operation of the electronic apparatus may be construed as being performed by control by the processor 120. In other words, when modules implemented in a system for clustering data on a battery charging pattern are executed, it may be construed that the modules control the processor 120 so that the processor 120 performs the following operations of the electronic apparatus 100.

The memory 130 may store a variety of information. The memory 130 may store data temporarily or semipermanently. For example, data on an operating system (OS) for operating the electronic apparatus 100 may be stored in the memory 130 of the electronic apparatus 100. An example of the memory 130 may include a hard disk drive (HDD), a solid state drive (SDD), a flash memory, a read-only memory (ROM), a random access memory (RAM), or the like. The memory 130 may be provided in an embedded type or a detachable type.

In summary, various example embodiments may be implemented through various devices. For example, various example embodiments may be implemented by hardware, firmware, software, a combination thereof, or the like.

In a case of implementation by the hardware, a method according to various example embodiments may be implemented by one or more of application specific integrated circuits (ASICs), digital signal processors (DSPs), digital signal processing devices (DSPDs), programmable logic devices (PLDs), field programmable gate arrays (FPGAs), a processor, a controller, a microcontroller, a microprocessor, or the like.

In a case of implementation by the firmware or the software, a method according to various example embodiments may be implemented in a form of a module, a procedure, a function, or the like that performs the above-described functions or operations. For example, software code may be stored in a memory to be operated by a processor. The memory may be positioned inside or outside the processor and may send and receive data to and from the processor through various devices publicly known in advance.

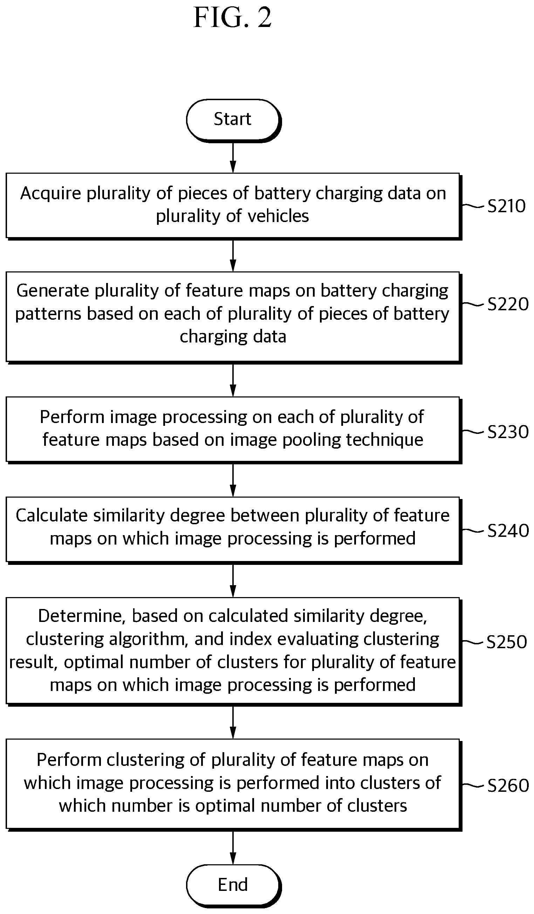

FIG. 2 is a flowchart illustrating a method of clustering data on a battery charging pattern according to an example embodiment.

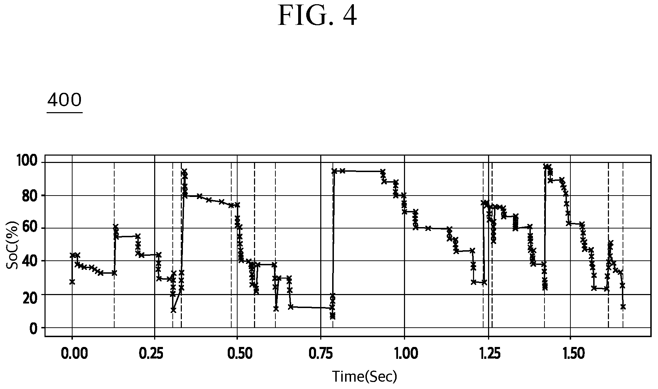

In operation S210, the electronic apparatus 100 may acquire a plurality of pieces of battery charging data on a plurality of vehicles. Here, the plurality of pieces of battery charging data may be data collected for a predetermined time for each of a plurality of batteries included in the plurality of vehicles and include information on a state of charge (SoC) over time. The predetermined time may be a period of time for which charging and discharging of a battery may be repeated a plurality of times and may be, for example, one month. Thus, the plurality of pieces of battery charging data may be time-series data including information on an SoC change over time during a plurality of times of repetition of charging and discharging of each of the plurality of batteries included in the plurality of vehicles. A detailed example of battery charging data will be described below in detail with reference to FIG. 4.

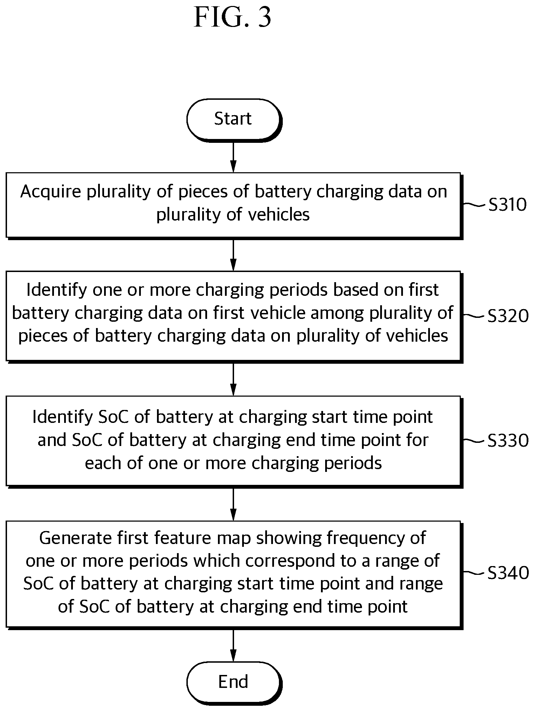

In operation S220, the electronic apparatus 100 may generate a plurality of feature maps on battery charging patterns based on each of the plurality of pieces of battery charging data. Here, a feature map may be an arrangement of numerical data showing characteristics extracted from corresponding battery charging data, and a value of each feature map may indicate how strongly an extracted characteristic is shown in a predetermined portion of the arrangement. The feature map may be visualized in a form of a two-dimensional image such as a hitmap that shows a value size, a density, or the like by using a color. That is, each pixel value of an image generated to correspond to the feature map may reflect a data value of a feature map at a corresponding position. Hereinafter, an image itself into which the feature map is visualized also will be referred to as "feature map" for convenience. A detailed process in which the electronic apparatus 100 generates the feature map will be described below in detail with reference to FIG. 3.

In operation S230, the electronic apparatus 100 may perform image processing on each of the plurality of feature maps based on an image pooling technique. The image pooling technique may be an image processing technique for reducing a size of the feature map and further emphasizing important information on a characteristic of data shown in the feature map. The image pooling technique may include a max pooling technique of selecting maximum values corresponding to a plurality of areas included in a target feature map and generating a feature map formed of the maximum values of the plurality of areas and a dilation pooling technique of generating a feature map formed of a representative value of at least some values individually included in the plurality of areas.

Specifically, the max pooling technique may be a technique of selecting a maximum value from each of a plurality of areas that has a predetermined size and is included in a target feature map and generating a reduced feature map formed of a plurality of selected maximum values. Accordingly, a most prominent characteristic may be emphasized, and noise may be reduced. Meanwhile, the dilation pooling technique may be a technique of selecting at least some values at intervals of a predetermined dilation rate in each area, obtaining a representative value such as a maximum value or an average value from the at least some selected values, and generating a reduced feature map formed of a plurality of obtained representative values. Accordingly, spatial information on a position of information on a characteristic of data may be further efficiently reflected. In some example embodiments, the max pooling technique or the dilation pooling technique may be performed based on characteristics of the plurality of feature maps. In addition thereto, various pooling techniques for simplifying and clarifying a characteristic of a target feature map depending on a purpose of the image processing and an attribute of the target feature map may be performed.

The image processing may be performed on each of the plurality of feature maps as such, a missing value and an outlier may be removed therethrough, and thus, each characteristic may be emphasized. In other words, an ability to distinguish each feature map from another may be improved through the image processing, and through this, performance of clustering may be further facilitated.

In operation S240, the electronic apparatus 100 may calculate a similarity degree between the plurality of feature maps on which the image processing is performed. Here, the similarity degree between the plurality of feature maps may be a similarity degree between images. A similarity degree between feature map images may be calculated based on, for example, a structural similarity index measure (SSIM) that measures a similarity degree based on visual similarity. Specifically, the SSIM may be an indicator for comparing images by measuring a difference between structural characteristics of the images, such as brightness, contrast, and a structural pattern, and may reflect a visual characteristic sensed by a human other than a difference between simple pixel values.

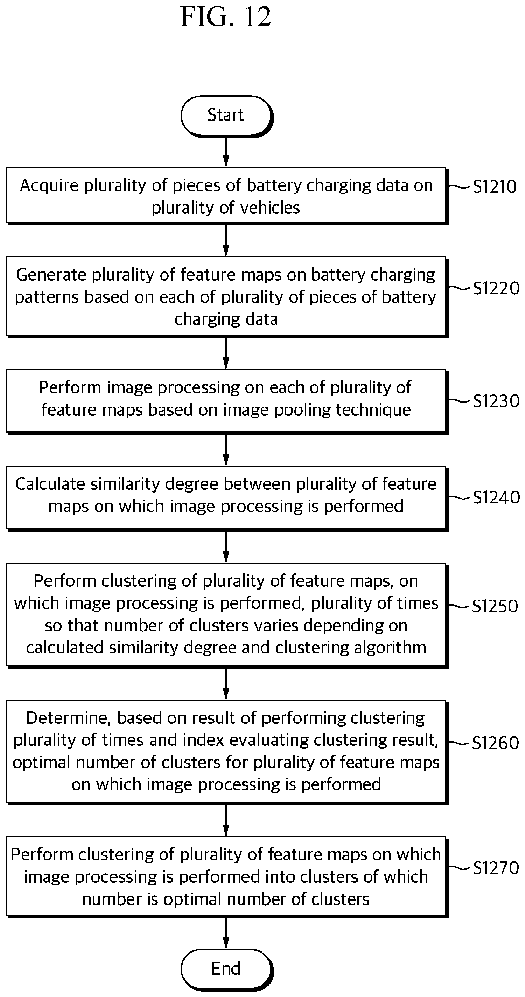

In operation S250, the electronic apparatus 100 may determine, based on the calculated similarity degree, a clustering algorithm, and an index evaluating a clustering result, an optimal number of clusters for the plurality of feature maps on which the image processing is performed. Here, the clustering algorithm may be an algorithm that divides target data into a cluster having similar characteristics (e.g., a calculated similarity degree between images), and the index may be an index that quantitatively evaluates performance of clustering based on cohesion (which refers to a measure of how closely pieces of data are grouped within an identical cluster) of each cluster based on the clustering, separation (which refers to a measure of how clearly different clusters are distinguished from each other) between clusters, or the like. Meanwhile, the optimal number of clusters may refer to the number of clusters for further efficiently clustering the plurality of feature maps so that a boundary thereof becomes distinct. A detailed example embodiment in which the electronic apparatus 100 determines the optimal number of clusters for the plurality of feature maps based on the similarity degree, the clustering algorithm, and the index will be described below in detail with reference to FIG. 12.

In operation S260, the electronic apparatus 100 may perform clustering of the plurality of feature maps on which the image processing is performed into clusters of which the number is the optimal number of clusters. According to such performance of the clustering, types that allow subdivision and objective classification in association with the battery charging pattern may be discovered.

FIG. 3 illustrates a process of generating a feature map based on data on a battery charging pattern according to an example embodiment.

According to an example embodiment, the electronic apparatus 100 may acquire a plurality of pieces of charging data on a plurality of vehicle (in operation S310) and may identify one or more charging periods based on first battery charging data on a first vehicle among the plurality of pieces of battery charging data on the plurality of vehicles (in operation S320). Then, the electronic apparatus 100 may identify an SoC of a battery at a charging start time point and an SoC of the battery at a charging end time point for each of the one or more charging periods (in operation S330) and may generate a first feature map showing a frequency of the one or more periods which corresponds to a range of the SoC of the battery at the charging start time point and a range of the SoC of the battery at the charging end time point (in operation S340). That is, the electronic apparatus 100 may generate the first feature map as a feature map on a charging pattern of the first battery charging data on the first vehicle and generate respective feature maps for each of the plurality of vehicles.

Specifically, the electronic apparatus 100 may analyze a frequency of a charging period and estimate a probability density function for a frequency of each charging period. Then, the electronic apparatus 100 may generate, based on the estimated probability density function, a feature map in a form of an image showing a frequency of a battery charging period of a corresponding vehicle. The electronic apparatus 100 may generate a plurality of feature maps on battery charging patterns by performing such a process for the plurality of pieces of battery charging data.

Each of the plurality of feature maps which is in the form of the image may show a predetermined battery charging pattern extracted from battery charging data on a predetermined vehicle. In other words, when users of vehicles on which pieces of battery charging data are collected are different for the respective vehicles, each feature may show a charging pattern by user of a corresponding vehicle.

FIG. 4 illustrates data on a battery charging pattern according to an example embodiment.

Referring to FIG. 4, first battery charging data on a first vehicle may be in a form such as a graph 400 of which an x-axis is a time and a y-axis is an SoC. Specifically, the graph 400 may include SoC information on a first battery of the first vehicle in a predetermined period of time. Further specifically, information on a charging period identified each time the first battery is charged may be included. Accordingly, a graph 300 may show a degree of an SoC at which charging starts and a degree of an SoC at which the charging ends each time the first battery is charged.

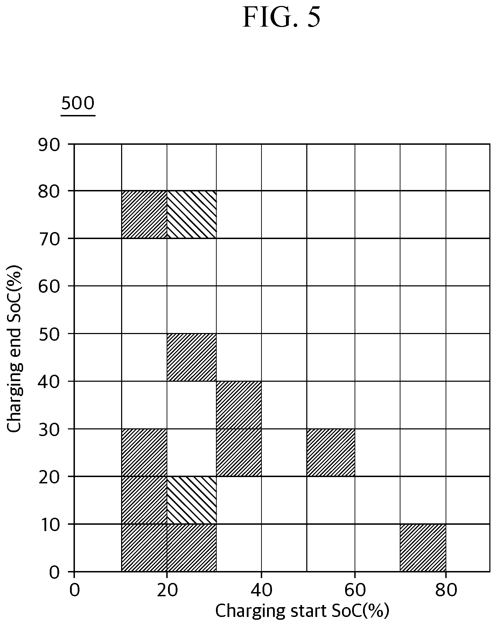

FIG. 5 illustrates statistics data on a charging period according to an example embodiment.

Referring to FIG. 5, the electronic apparatus 100 may generate a statistics data graph 500 in which a frequency of a charging period of a first battery is analyzed based on a first battery charging data graph 400. The statistics data graph 500 may comprehensively show a charging start SoC and a charging end SoC of each charging period and a degree to which each charging period is repeated and may be in a form of a graph of which an x-axis is the charging start SoC and a y-axis is the charging end SoC. A frequency of each charging period may be shown in a pattern, a shade of a color, or the like corresponding to each charging period. In the graph 500, the frequency may be shown as a density of a pattern corresponding to a space representing each charging period. In other words, each space having the pattern in the graph 500 may show that a charging action, which corresponds to a charging period from an SoC at which charging starts to an SoC at which the charging ends, has existed. When being in a form having a lower-density pattern, each space may indicate a higher frequency of charging in a corresponding period. Accordingly, the statistics data graph 500 may show that frequencies of charging in a period in which the charging starts at approximately an SoC of 20 to 30% and ends at approximately an SoC of 10 to 20% and charging in a period in which the charging starts at approximately an SoC of 20 to 30% and ends at approximately an SoC of 70 to 80% are relatively higher. Meanwhile, the statistics graph 500 may be generated as such, and through this, data irrelevant to a charging period may be filtered in first battery charging data.

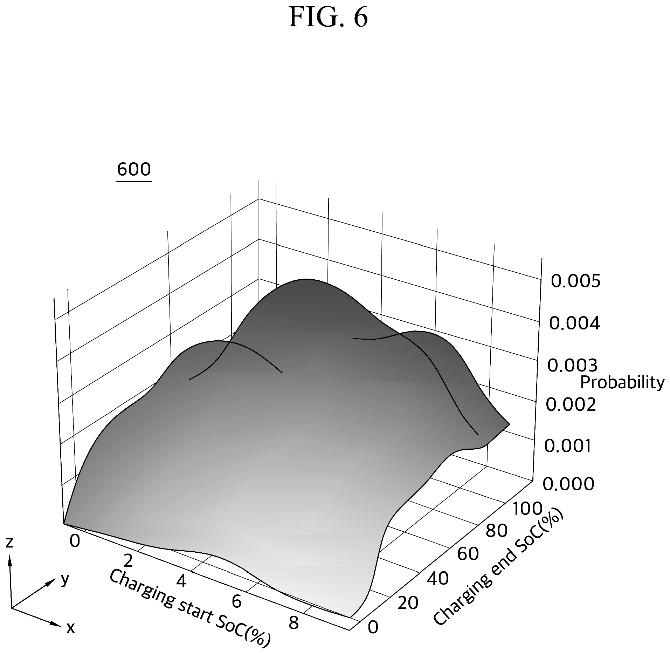

FIG. 6 illustrates a probability distribution graph on a frequency of a charging period according to an example embodiment.

Referring to FIG. 6, the electronic apparatus 100 may estimate a probability density function for a frequency of each charging period based on the statistics data graph 500. As a more detailed example, the electronic apparatus 100 may estimate, by using a kernel density estimation (KDE) technique that estimates a probability density function through a kernel function, the probability density function for the frequency of each charging period identified based the statistics data graph 500. Then, based on the estimated probability density function, the electronic apparatus 100 may generate a graph 600 in which a probability distribution of charging periods is visualized. A probability distribution graph 600 that is estimated therethrough may be in a form of a three-dimensional graph of which an x-axis is a charging start SoC, a y-axis is a charging end SoC, and a z-axis is a probability of a corresponding SoC period and may show a probability density estimated for each charging period. Meanwhile, although not illustrated in FIG. 6, in some example embodiments, the graph may be generated so that a degree of the probability or a frequency of a charging period is shown through a shade, a pattern, or the like in the probability distribution graph.

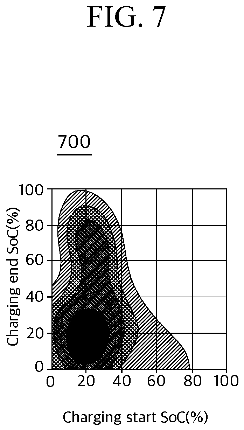

FIG. 7 illustrates a feature map according to an example embodiment.

Referring to FIG. 7, the electronic apparatus 100 may generate a first feature map based on the probability distribution graph 600 of charging periods identified for a first battery and visualize the first feature map into a feature map 700 in a form of a two-dimensional hitmap image of which an x-axis is a charging start SoC and a y-axis is a charging end SoC. Here, a shade in the feature map 700 may be a frequency of a charging period. That is, a darker shade in the feature map 700 may be a period in which the first battery is frequently charged. Accordingly, each feature map may show a charging practice or tendency associated with an SoC at which charging starts mainly and an SoC at which the charging ends mainly in a corresponding vehicle. As a more detailed example, the feature map 700 may show that a user of a first vehicle has a charging practice of starting charging mainly at a low SoC and ending the charging mainly at a low SoC.

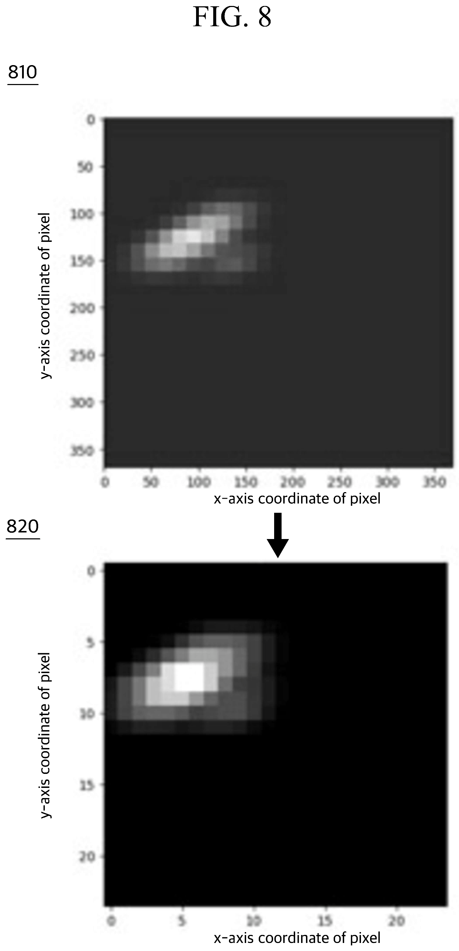

FIG. 8 illustrates a process of performing image processing based on a max pooling technique according to an example embodiment.

Referring to FIG. 8, the electronic apparatus 100 may perform image processing on a feature map 810 based on the max pooling technique. In order to perform the pooling technique, the electronic apparatus 100 may visualize a feature map based on a pixel coordinate system. In other words, the feature map 810 may be in a form of an image of which an x-axis is an x-axis coordinate of a pixel and a y-axis is a y-axis coordinate of a pixel, and a feature map 820 on which max pooling is performed may be in a form of an image having a reduced size compared to the feature map 810. The feature map 820 may prominently show a characteristic of an image according to the max pooling.

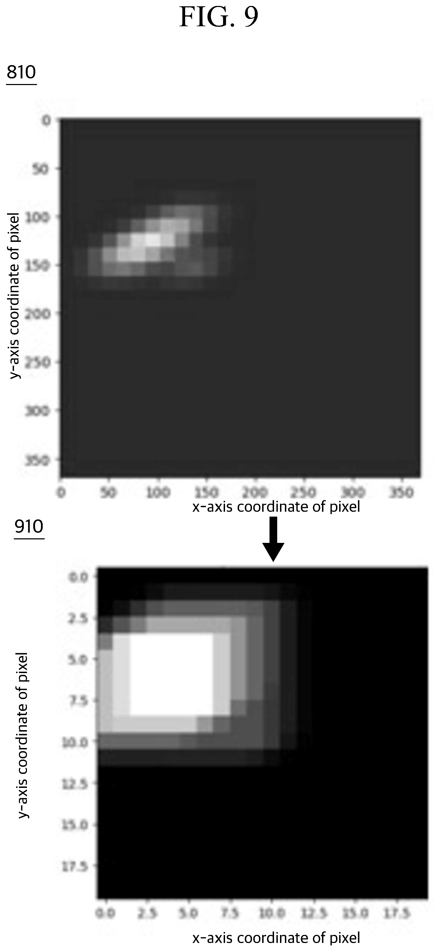

FIG. 9 illustrates a process of performing an image processing based on a dilation pooling technique according to an example embodiment.

A description of FIG. 8 will be applied identically to FIG. 9, except that the dilation pooling technique other than max pooling is performed. A feature map 910 on which dilation pooling is performed may be in a form of an image having a reduced size compared to the feature map 810 and may prominently show a characteristic of an image according to the dilation pooling.

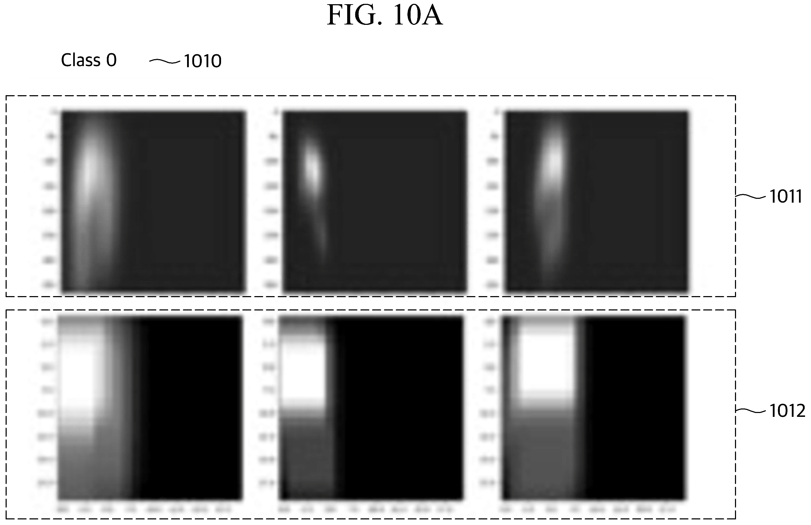

FIGS. 10A through 10C illustrate a plurality of feature maps on which a pooling technique according to an example embodiment is performed.

FIGS. 10A through 10C illustrate an effect in which different feature maps are modified into identical or similar feature maps as images are further simplified and characteristics thereof become prominent through the pooling technique. A class in each drawing refers to a group into which identical or greatly similar images are classified. A plurality of feature maps classified into each class and a plurality of feature maps on which pooling is performed are illustrated in each drawing.

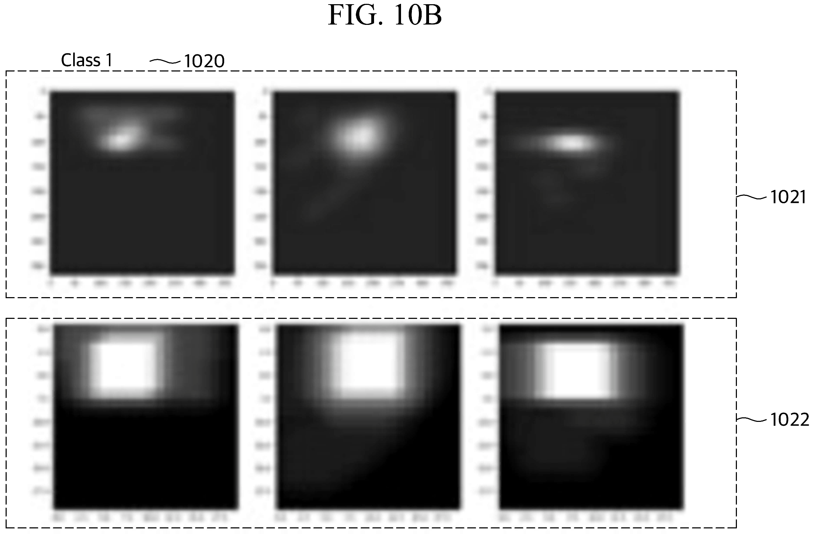

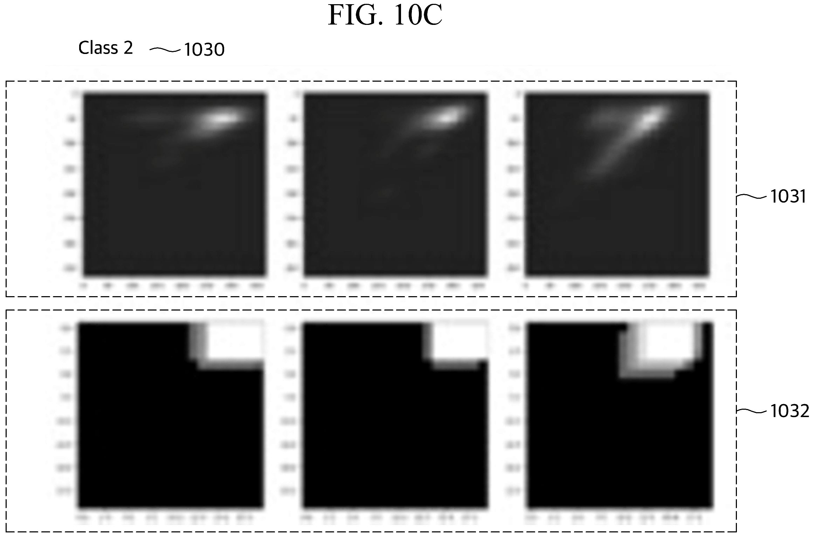

Referring to FIG. 10A, in class 0 1010, a plurality of feature maps 1011 may be included, and a plurality of feature maps 1012 in which pooling is performed on each of the plurality of feature maps 1011 may be included. Referring to the plurality of feature maps 1012 on which the pooling is performed, as a characteristic of each feature map, which is shown in a shade, is simplified due to the pooling, determining that the plurality of feature maps 1012 belongs to an identical group may be further facilitated. Through this, the electronic apparatus 100 may efficiently and promptly perform clustering of a feature map on which pooling is performed. FIG. 10B illustrates a plurality of feature maps 1021 that belongs to class 1 1020 and a plurality of feature maps 1022 on which pooling is performed, and FIG. 10C illustrates a plurality of feature maps 1031 that belongs to class 2 1030 and a plurality of feature maps 1032 on which pooling is performed. A description of FIG. 10A may be applied identically thereto.

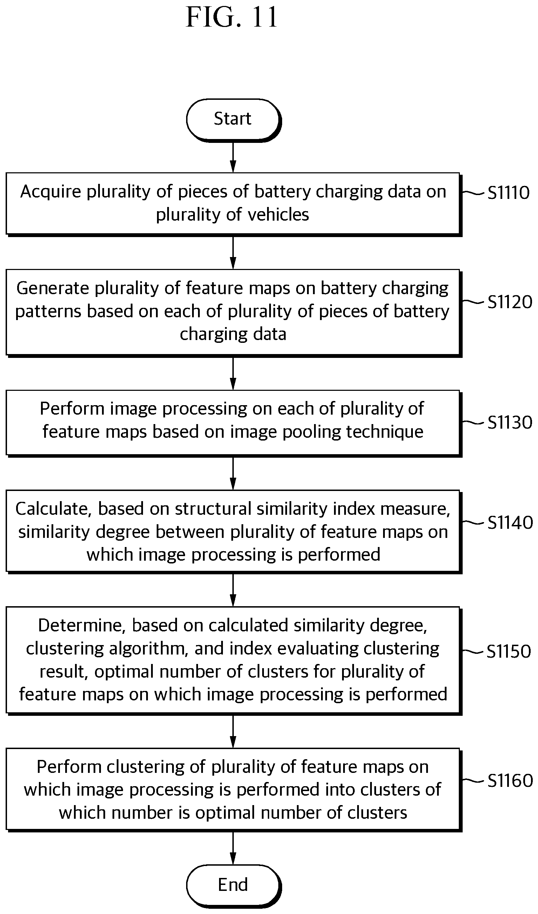

FIG. 11 illustrates a process of clustering based on a similarity degree between according to an example embodiment.

According to an example embodiment, the electronic apparatus 100 may acquire a plurality of pieces of battery charging data on a plurality of vehicles (in operation S1110). Then, the electronic apparatus 100 may generate a plurality of feature maps on battery charging patterns based on each of the plurality of pieces of battery charging data (in operation S1120) and perform image processing on each of the generated plurality of feature maps based on an image pooling technique (in operation S1130).

Then, for clustering, the electronic apparatus 100 may calculate, based on a structural similarity index measure, a similarity degree between the plurality of feature maps on which the image processing is performed (in operation S1140). In other words, the electronic apparatus 100 may measure a structural similarity between the plurality of feature maps of which characteristics are simplified through the image processing and therethrough may calculate a similarity degree to which visual similarity between the feature maps is effectively applied. The similarity degree may be used as a base for performance of the clustering.

The electronic apparatus 100 may determine, based on the similarity degree calculated as such, a clustering algorithm, and an index evaluating a clustering result, an optimal number of clusters for the plurality of feature maps on which the image processing is performed (in operation S1150) and perform clustering of the plurality of feature maps on which the image processing is performed into clusters of which the number is the optimal number of clusters (in operation S1160).

FIG. 12 illustrates a process of clustering based on a clustering algorithm and an index according to an example embodiment.

According to an example embodiment, the electronic apparatus 100 may acquire a plurality of pieces of battery charging data on a plurality of vehicles (in operation S1210) and generate a plurality of feature maps on battery charging patterns based on each of the plurality of pieces of battery charging data (in operation S1220). Then, the electronic apparatus 100 may perform image processing on each of the plurality of feature maps based on an image pooling technique (in operation S1230) and calculate a similarity degree between the plurality of feature maps on which the image processing is performed (in operation S1240).

Then, the electronic apparatus 100 may perform clustering of the plurality of feature maps, on which the image processing is performed, a plurality of times so that the number of clusters varies depending on the calculated similarity degree and the clustering algorithm (in operation S1250). Specifically, the electronic apparatus 100 may perform the clustering of the plurality of feature maps, on which the image processing is performed, the plurality of times so that the number of clusters is k (k∈{2, 3, ..., k}) depending on the clustering algorithm. That is, the electronic apparatus 100 may cluster the plurality of feature maps, on which the image processing is performed, the plurality of times so that the number of clusters varies each time the clustering is performed.

According to an example embodiment, the clustering algorithm which is performed on the plurality of feature maps on which the image processing is performed may be one of all types of clustering algorithms that may set the number of clusters as a parameter (that is, in which hyper-parameterization is allowed). For example, the clustering algorithm may be a hierarchical clustering algorithm that hierarchizes, based on a similarity degree, at least some features included in each data set. Since generating an initial similarity matrix based on an inter-image similarity degree such as a structural similarity index measure and then repeating a process of merger between highly similar clusters or division into sub-clusters based thereon, the hierarchical clustering algorithm may have an advantage of a greatly small amount of calculation.

Then, the electronic apparatus 100 may determine, based on a result of performing the clustering the plurality of times and an index evaluating a clustering result, the optimal number of clusters for the plurality of feature maps on which the image processing is performed (in operation S1260). Here, the index may include, for example, a first index, a second index, and a third index. The electronic apparatus 100 may calculate, based on the result of performing the clustering the plurality of times, each of the first index based on the number of clusters, the second index based on the number of clusters, and the third index based on the number of clusters. An index based on the number of clusters may be a performance indicator that evaluates results of performing the clustering with different k values and may be arranged, for example, in a form of a graph. Meanwhile, types of indexes calculated based on the result of performance of the clustering the plurality of times by the electronic apparatus 100 are not limited to three types of indexes. It may be clearly understood to those skilled in the art that more types of indexes may be calculated depending on example embodiments.

In an example embodiment, the first index, the second index, and the third index each may include at least one of a silhouette index technique, a Calinski-Harabasz index technique, and a Davies-Bouldin index technique that evaluate, for each result of the clustering according to the clustering algorithm, a result of the clustering based on cohesion of each cluster and inter-cluster separation. The above-described techniques may differ in a process of calculating the cohesion and the separation. For example, according to the silhouette index technique, the cohesion may be calculated based on an average of SSIMs between each data point and all other data points in an identical cluster, and the separation may be calculated based on an average of SSIMs between all data points in another cluster closest to each cluster. In contrast, according to the Calinski-Harabasz index technique, the cohesion may be calculated based on a sum of an average of SSIMs between all data points of each cluster and a center of a corresponding cluster, and the separation may be calculated based on a sum of an average of SSIMs between a center of each cluster and all data points of another cluster. Also, according to the Davies-Bouldin index technique, the cohesion may be calculated based on an average of SSIMs between a data point of each cluster and a center of a corresponding cluster, and the separation may be calculated based on an average of SSIMs between the all data points of each cluster and all data points of another cluster.

Then, the electronic apparatus 100 may determine an optimal number of clusters for a first data set based on a first number of clusters corresponding to a maximum value or a minimum value of the calculated first index based on the number of clusters, a second number of clusters corresponding to a maximum value or a minimum value of the calculated second index based on the number of clusters, and a third number of clusters corresponding to a maximum value or a minimum value of the calculated third index based on the number of clusters. Here, the maximum value or the minimum value of the first index, the maximum value or the minimum value of the second index, and the maximum value or the minimum value of the third index each may correspond to an optimal value that is one of a maximum value and a minimum value set based on a characteristic of the index. For example, when the index is the silhouette index technique or the Calinski-Harabasz index technique, the maximum value may correspond to the optimal value. In a case of the Davies-Bouldin index technique, the minimum value may correspond to the optimal value. Meanwhile, the optimal value by index is not limited to the maximum value or the minimum value and may be set to an appropriate value depending on the characteristic of the index.

According to an example embodiment, the optimal number of clusters for the plurality of feature maps on which the image processing is performed may be set to a repeated value among the first number of clusters, the second number of clusters and the third number of clusters. In other words, the number of clusters at which maximum values or minimum values cross as a result of evaluation with three indexes may be set to the optimal number of clusters. For example, when the first number of clusters and the second number of clusters are 9, and when the third number of clusters is 8, the optimal number of clusters may be set to 9. As such, the number of clusters which is evaluated as having the optimal value according to various index techniques may be set to the optimal number of clusters for the first data set, and through this, clustering that guarantees high performance may be performed. According to another example embodiment, when all of the first number of clusters, the second number of clusters, and the third number of clusters have different values, an average value thereof may be set to the optimal number of clusters for the plurality of feature maps on which the image processing is performed.

Then, the electronic apparatus 100 may perform the clustering of the plurality of feature maps on which the image processing is performed into clusters of which the number is the optimal number of clusters (in operation S1270). That is, the plurality of feature maps on which the image processing is performed may be clustered into the clusters of which the number is the optimal number of clusters which is set as described above.

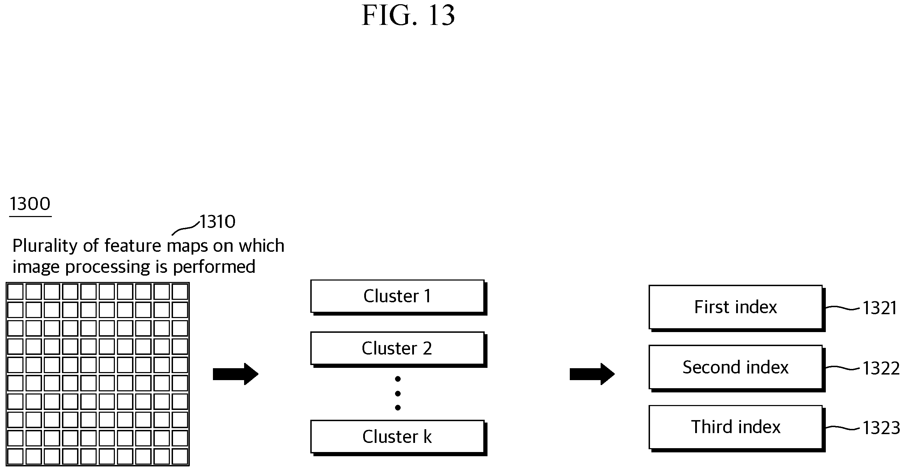

FIG. 13 illustrates a process of determining an optimal number of clusters according to an example embodiment.

Referring to FIG. 3 which illustrates a process 1300 of determining an optimal number of clusters for a plurality of feature maps 1310 on which a plurality of times of image processing is performed, the electronic apparatus 100 may perform a plurality of times of clustering, of the plurality of feature maps 1310 on which image processing is performed, into clusters of which the number is k. As described above, the plurality of times of clustering may be performed with the numbers of clusters of which respective k values are different. Then, the electronic apparatus 100 may calculate each of a first index 1321 based on a k value, a second index 1322 based on a k value, and a third index 1323 based on a k value and determine, based thereon, the optimal number of clusters for the plurality of feature maps 1310 on which the image processing is performed.

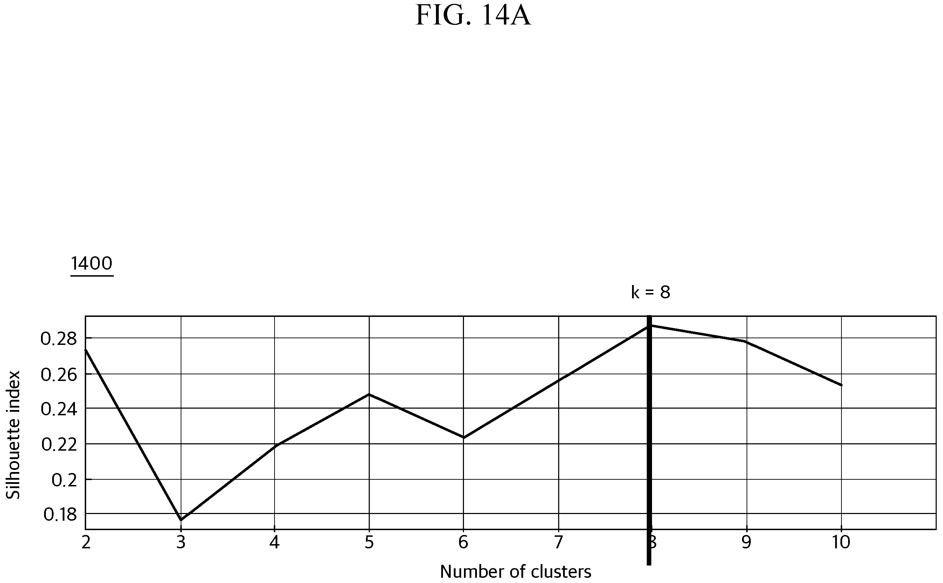

FIG. 14A illustrates a first index based on the number of clusters, which is according to an example embodiment.

Here, the first index may be a silhouette index. A graph 1400 has the number of clusters (k) as an x-axis and the silhouette index as a y-axis and shows a silhouette index estimated for each k value, ranging from 2 to 10, of the number of clusters. In a case of a silhouette index technique, since a maximum value is an optimal value, the number of clusters corresponding to the optimal value, in the first index, may be 8.

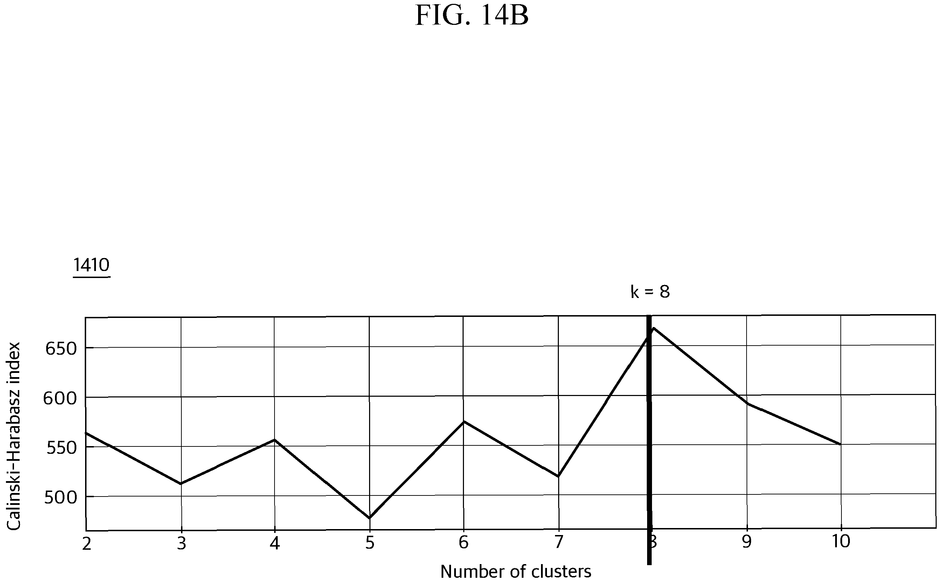

FIG. 14B illustrates a second index based on the number of clusters, which is according to an example embodiment.

Here, the second index may be a Calinski-Harabasz index. A graph 1410 has the number of clusters (k) as an x-axis and the Calinski-Harabasz index as a y-axis and shows a Calinski-Harabasz index estimated for each k value, ranging from 2 to 10, of the number of clusters. In consideration of a fact that a maximum value is an optimal value in a case of a Calinski-Harabasz index technique, the number of clusters corresponding to the optimal value, in the second index, may be 8 that is equal to that in FIG. 14A.

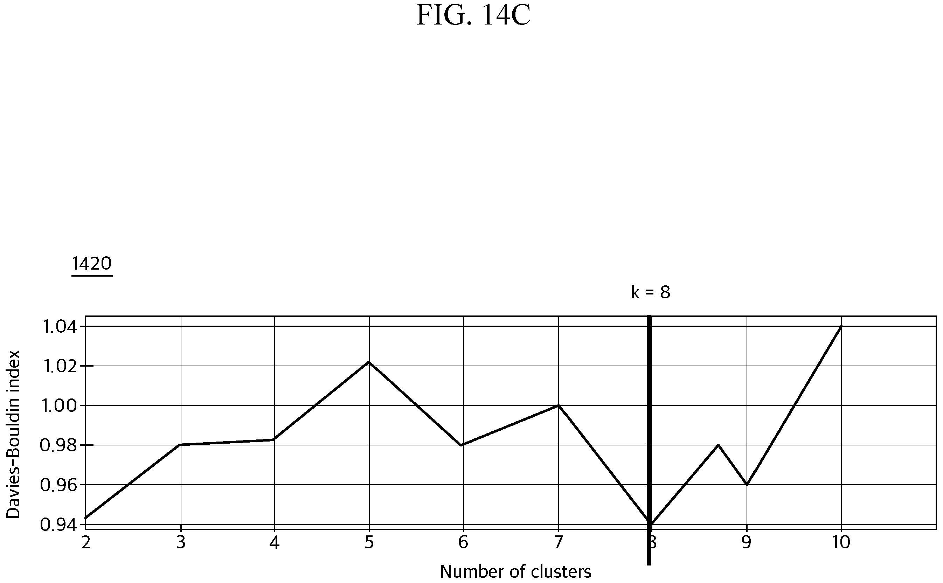

FIG. 14C illustrates a third index based on the number of clusters, which is according to an example embodiment.

Here, the third index may be a Davies-Bouldin index. A graph 1420 has the number of clusters (k) as an x-axis and the Davies-Bouldin index as a y-axis and shows a Davies-Bouldin index estimated for each k value, ranging from 2 to 10, of the number of clusters. In consideration of a fact that a minimum value is an optimal value in a case of a Davies-Bouldin index technique, the number of clusters corresponding to the optimal value, in the third index, may be 8 that is equal to those in FIGS. 14A and 14B.

In other words, in examples of FIGS. 14A through 14C, an optimal number of clusters for a target data set determined based on calculated indexes may be 8.

The electronic apparatus according to the above-described example embodiments may include a processor, a memory that stores and executes program data, a permanent storage such as a disk drive, a communication port for communicating with an external device, and a user interface device such as a touch panel, a key, and an button. Methods implemented by software modules or algorithms may be stored in a computer-readable recording medium as computer-readable code or program instructions executable in the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

The present example embodiments may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include the meaning of a series of routines of software in association with a processor.

The above-described embodiments are merely examples and other embodiments may be implemented within the scope of the following claims.

## Claims

1. An electronic apparatus comprising:
a transceiver;
a processor; and
one or more memories configured to store one or more instructions,
wherein when the one or more instructions are executed, the processor is configured to:
acquire a plurality of pieces of battery charging data on a plurality of vehicles;
generate a plurality of feature maps on battery charging patterns based on each of the plurality of pieces of battery charging data;
perform image processing on each of the plurality of feature maps based on an image pooling technique;
calculate a similarity degree between the plurality of feature maps on which the image processing is performed;
determine, based on the calculated similarity degree, a clustering algorithm, and an index evaluating a clustering result, an optimal number of clusters for the plurality of feature maps on which the image processing is performed; and
perform clustering of the plurality of feature maps on which the image processing is performed into clusters of which the number is the optimal number of clusters.

2. The electronic apparatus of claim 1, wherein the plurality of pieces of battery charging data is data collected for a predetermined time for each of a plurality of batteries included in the plurality of vehicles and comprises information on a state of charge (SoC) over time.

3. The electronic apparatus of claim 2, wherein when the one or more instructions are executed, the processor is configured to:
identify one or more charging periods based on first battery charging data on a first vehicle among the plurality of pieces of battery charging data on the plurality of vehicles;
identify an SoC of a battery at a charging start time point and an SoC of the battery at a charging end time point for each of the one or more charging periods; and
generate a first feature map showing a frequency of the one or more periods which correspond to a range of the SoC of the battery at the charging start time point and a range of the SoC of the battery at the charging end time point.

4. The electronic apparatus of claim 3, wherein the frequency of the one or more charging periods is identified based on a probability density function.

5. The electronic apparatus of claim 1, wherein the image pooling technique includes a max pooling technique of selecting maximum values corresponding to a plurality of areas included in a target feature map and generating a feature map formed of the maximum values of the plurality of areas and a dilation pooling technique of generating a feature map formed of a representative value of at least a portion of values individually included in the plurality of areas.

6. The electronic apparatus of claim 1, wherein when the one or more instructions are executed, the processor is configured to calculate, based on a structural similarity index measure, the similarity degree between the plurality of feature maps on which the image processing is performed.

7. The electronic apparatus of claim 1, wherein when the one or more instructions are executed, the processor is configured to:
perform the clustering of the plurality of feature maps, on which the image processing is performed, a plurality of times so that a number of clusters varies depending on the calculated similarity degree and the clustering algorithm; and
determine, based on a result of performing the clustering the plurality of times and the index evaluating the clustering result, the optimal number of clusters for the plurality of feature maps on which the image processing is performed.

8. The electronic apparatus of claim 7, wherein the clustering algorithm includes a hierarchical clustering algorithm that hierarchizes, based on the similarity degree, at least a portion of feature maps included in the plurality of feature maps on which the image processing is performed.

9. The electronic apparatus of claim 7, wherein the index includes a first index, a second index, and a third index, and when the one or more instructions are executed, the processor is configured to:
calculate, based on the result of performing the clustering the plurality of times, each of the first index based on a number of clusters, the second index based on a number of clusters, and the third index based on a number of clusters; and
determine an optimal number of clusters for the plurality of feature maps on which the image processing is performed based on a first number of clusters corresponding to a maximum value or a minimum value of the calculated first index based on the number of clusters, a second number of clusters corresponding to a maximum value or a minimum value of the calculated second index based on the number of clusters, and a third number of clusters corresponding to a maximum value or a minimum value of the calculated third index based on the number of clusters.

10. The electronic apparatus of claim 9, wherein the first index, the second index, and the third index each includes at least one of a silhouette index technique, a Calinski-Harabasz index technique, and a Davies-Bouldin index technique that evaluate, for each result of the clustering according to the calculated similarity degree and the clustering algorithm, a result of the clustering based on cohesion of each cluster and inter-cluster separation.

11. A method of clustering data on a battery charging pattern, the method performed by an electronic apparatus and comprising:
acquiring a plurality of pieces of battery charging data on a plurality of vehicles;
generating a plurality of feature maps on battery charging patterns based on each of the plurality of pieces of battery charging data;
performing image processing on each of the plurality of feature maps based on an image pooling technique;
calculating a similarity degree between the plurality of feature maps on which the image processing is performed;
determining, based on the calculated similarity degree, a clustering algorithm, and an index evaluating a clustering result, an optimal number of clusters for the plurality of feature maps on which the image processing is performed; and
performing clustering of the plurality of feature maps on which the image processing is performed into clusters of which the number is the optimal number of clusters.

12. A non-transitory computer-readable recording medium in which a program for executing the method of claim 11 on a computer is recorded.
